# EUROPEAN PATENT SPECIFICATION

(11) **EP 1 922 917 B1**
(45) Date of publication and mention of the grant of the patent: **17.06.2009**
(21) Application number: 06380300.1
(22) Date of filing: 17.11.2006
(51) Int. Cl.: A01G 9/06

(54) **Machine for cleaning plant pots**
Vorrichtung zum Reinigen von Pflanzentöpfen
Appareil destiné au lavage des pots de fleurs

(43) Date of publication of application: 21.05.2008
(73) Proprietor: Albin Instalaciones y Paisajismo, S.L., 15147 Coristanco (a Coruna) (ES)
(72) Inventor: Blanco, Abel Lage, 15147 Coristanco (A Coruña) (ES)
(74) Representative: Carpintero Lopez, Francisco

(56) References cited:
- DE-A1- 2 802 955
- FR-A- 2 431 249
- GB-A- 2 238 714
- US-A- 3 195 158

## Description

### OBJECT OF THE INVENTION

The present invention is applicable for cleaning the surface of plant pots containing plants that are ready for dispatching.

The object of the invention is the development of a machine that makes it possible to clean the lateral outer surface of the plant pot quickly and simply, and the fact that the machine is sufficiently versatile to adapt the cleaning operation to plant pots of different sizes.

### BACKGROUND OF THE INVENTION

In nurseries, plants are prepared to be dispatched in such a way that the customer, either a gardener, private client or garden centres, can exhibit it in a satisfactory state of health and cleanliness. It is therefore important for the plant to present an attractive appearance for the future customer, it should be free from weeds and the plant pot should be free from mould and soil.

IPM standards (Integrated Pest Management) aim to regulate the biological control process, the use of pesticides, and the entomology and pathology of plants, in addition to regulating the traceability of the plant and controlling its cleanliness in all the processes leading up to its sale.

Nowadays the plant is cleaned of weeds by means of natural covers or elements such as coconut fibre chips, pine bark mulch, etc.

The plant pot or container is cleaned manually using brushes or cloths, which involves an excessive use of water and often results in bacteria or fungi being transferred to the cleaning element, e.g. a brush or cloth.

There is a known machine for cleaning plant pots that comprises a container, housed wherein is a rotatory mechanism with brushes, and an upper plate with a wide opening through which the body of the plant pot passes until it rests by its upper rim on the perimeter edge of said opening.

The rotatory mechanism has a structure with a vertical rotational axis that rotates due to the action of a motor and operates brushes situated opposite each other in a vertical position, and a horizontal brush positioned in its base.

The relative position of the vertical brushes is determined by the dimensions of the plant pot to be cleaned and the distance between them must be regulated manually to adapt it to the diameter of the plant pot. The plate to be used in each case will also be selected with a size of opening depending on the diameter of the plant pot to be cleaned.

This machine has significant functional limitations for cleaning plant pots of different sizes deriving from the need to stop the machine to adjust the position of the brushes in accordance with the size of the plant pot, which involves a length of time that directly affects the machine's productivity.

Such machines are known from FR-A-2431249 and GB-A-2238714.

### DESCRIPTION OF THE INVENTION

The machine for cleaning plant pots according to claim 1 constitutes the object of this invention satisfactorily and resolves the above-described problems, as it avoids the need for manual labour and significantly speeds up the cleaning process, thus achieving an overall higher production than that achieved previously.

To provide a rough idea, a person dedicated to manually cleaning plant pots can achieve a production of approximately 500 to 600 plant pots in an eight-hour day, whereas this machine can clean up to 7,000 units per hour.

It also enables a more efficient use of water resources thanks to its controlled consumption thereof and enables the application of any type of anti-fungal treatment or suchlike during the cleaning process by adding certain compounds to the cleaning water.

The machine includes a number of mechanisms that act in combination with one another on the plant pot to move it from an input area where the dirty plant pot is placed and an output area where it is collected once cleaned, the plant pot undergoing a linear and rotational movement that makes it possible to clean its entire lateral outer surface.

Unlike other solutions, the plant pot is moved linearly upwards, whilst, in combination with this movement, it undergoes a rotation that facilitates the thorough washing of the entire height and perimeter of the plant pot.

The machine is designed to provide a great versatility of use due to the fact that most of the mechanisms that it comprises have been designed to help regulate its position or speed, in such a way that they can adapt the cleaning operation to a wide range of heights and diameters of plant pots.

The machine fundamentally includes a frame and a conveyor belt, preferably with an adjustable speed, mounted on the frame, which moves the plant pot from the input area towards the output area through an area where it is cleaned.

This conveyor belt is actuated by a motor, which can consist of, e.g. a gear motor with a manual or electric frequency variator, and it rests and tilts by means of an articulation on the frame of the machine and on a height regulator that is situated at the opposite end of the frame from the articulation.

This regulator is moved upwards by means of a manual or motorised actuation mechanism that determines the tilt of the conveyor belt, bringing about an adjustment in the tilt thereof. It is thereby possible to set greater angles at which the conveyor belt is tilted in relation to the horizontal in the case of cleaning plant pots of a greater height.

Once the plant pot is mounted on the conveyor belt, the plant pot is transported towards the cleaning area, wherein there is a very long cleaning brush or roller module, positioned at a higher level than the belt and on one side thereof, situated in a horizontal position that rotates on its axis parallel to the conveyor belt, which acts on the lateral outer surface of the plant pot, and on the other side there is a strap that moves longitudinally and at a higher speed than the conveyor belt.

This cleaning brush or roller module can consist of a continuous set of brushes that form a roller situated longitudinally along the same axis.

A number of nozzles are distributed along the cleaning roller module, which spray water onto the cleaning rollers to facilitate the cleaning operation and to prevent premature wear of these cleaning rollers.

When the plant pot passes through the cleaning area of the machine, it comes into contact with the strap on one side and with the cleaning roller module on the other side, and the lateral contact of the plant pot with the strap, which moves at a higher speed than the conveyor belt, brings about the rotation of the plant pot on its vertical axis. Meanwhile, the cleaning roller module, in its rotational movement, performs its cleaning function on the surface of the plant pot whilst pushing it to prevent it from becoming destabilised by the rotation transmitted to it by the strap, thus assisting the rotational movement of the plant pot in relation to its vertical axis.

The plant pot continues with this movement throughout the whole cleaning section, dragged by the linear movement resulting from the action of the conveyor belt, and rotatory around its vertical axis due to the action of the combined forward movement of the strap and the conveyor belt, and the rotational and pushing movement of the cleaning brush module.

As has been mentioned above, the conveyor belt is somewhat tilted in relation to the horizontal, whereby the tilt of the conveyor belt will be regulated so that the plant pot first comes into contact with the strap by its upper lateral section. As the plant pot moves forward through the cleaning section, it will be raised up from the horizontal plane due to the upward tilt of the conveyor belt, this movement in the plant pot meaning that the contact section of the plant pot with the strap is established at an increasingly lower level and that the cleaning roller module progressively cleans the lateral outer surface of the plant pot from its upper section down to its base.

Therefore, thanks to the combination of the upward rotational movement of the plant pot and the rotation of the cleaning brush module, it is possible to clean the entire height of the outer surface of the plant pot.

The strap is mounted on a pulley system actuated by a motor, preferably with an adjustable speed. This assembly is mounted on a traveller that can move transversally in this direction in relation to the frame due to a manual or motorised means of actuation, which makes it possible to regulate the position of the strap in terms of its distance from the cleaning roller module, therefore defining a suitable width for the plant pot to pass between said strap and the cleaning roller module, which will be regulated in accordance with the diameter of the plant pot.

It should also be mentioned that the frame of the machine includes an open-topped tank situated underneath the conveyor belt that collects the dirty water and also serves as a decanter to prevent solid waste from reaching the drainage network.

The machine includes an electrical control panel to control the operation of the different motorised elements of the installation.

The machine complementarily includes an input detector situated beside the conveyor belt at the beginning of the cleaning area, which detects when a plant pot passes, whereupon it sends a signal that results in the activation of an electrically-operated valve that causes water to be sprayed onto the cleaning brush module. By regulating the water spray at exactly the right moment it is possible to control the water consumption, which could be approximately 200 litres per hour.

The machine can also have an output detector at the end of the conveyor belt that detects when the plant pot passes, whereupon the movement of the conveyor belt stops in order to prevent the plant pot from falling off the end.

### DESCRIPTION OF THE DRAWINGS

To complement this description and in order to aid a better understanding of the invention's characteristics, according to a preferred practical embodiment thereof, there is a set of illustrative and non-limiting drawings integral to said description are attached, which are as follows:
Figure 1.- Shows an elevation view of the machine for cleaning a plant pot situated on the conveyor belt before reaching the cleaning area.
Figure 2.- Shows a plan view of the machine with a plant moving through the cleaning section with a forward and rotational movement.
Figure 3.- Shows a side view of the machine.
Figure 4.- Shows an enlarged view of a detail of figure 3 sectioned along A-A of figure 1, wherein a plant pot is shown during the cleaning process thereof.
Figure 5.- Shows an elevation view of the conveyor belt, showing the tilt of the belt being adjusted to adapt it to the height of the plant pot to be cleaned.

### PREFERRED EMBODIMENT OF THE INVENTION

In view of the figures, a preferred embodiment of the machine for cleaning plant pots that constitutes the object of this invention is described below.

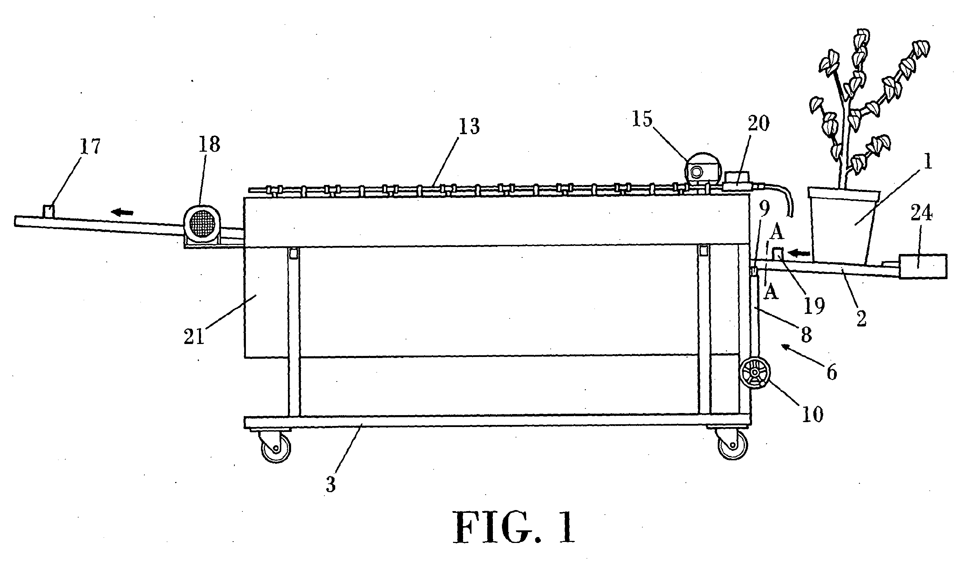

The machine is applicable for cleaning the lateral outer surface of the entire height of the plant pot (1) and, as can be observed in figure 1, it comprises a conveyor belt (2) with an input area whereon the dirty plan pot is placed and an output area wherefrom the clean plant pot is collected, and a frame (3) that supports the conveyor belt (2) whereon the cleaning area is located.

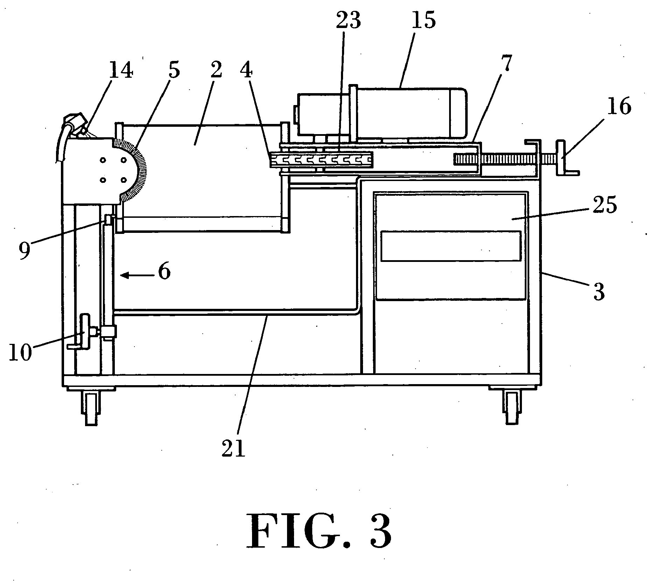

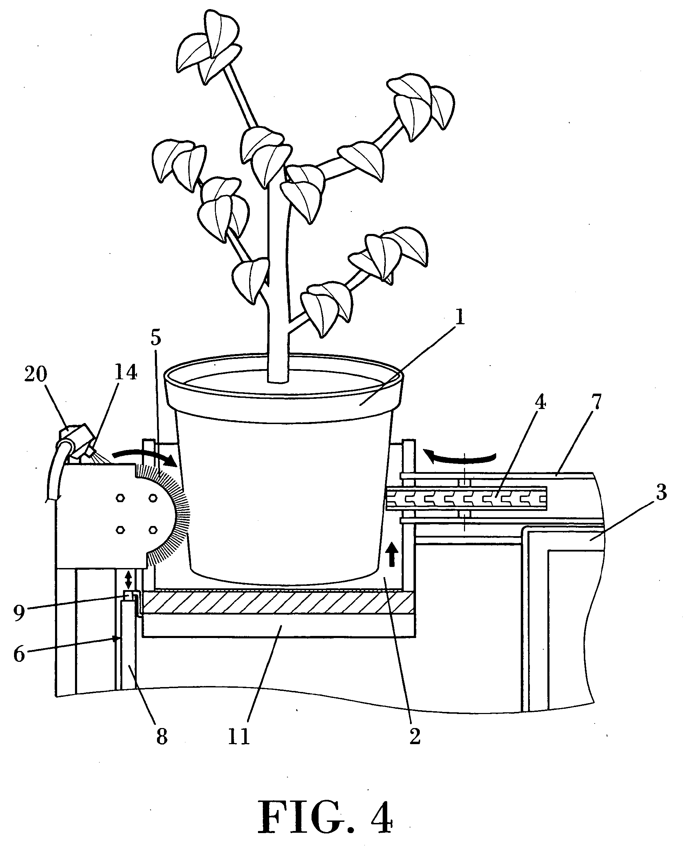

As can be observed in figure 3 or in the enlarged detail in figure 4, in the cleaning area there is a strap (4), at a higher level than the conveyor belt (2) and on one side thereof, which moves longitudinally in the direction of the conveyor belt (2) and at a greater speed than this and which is designed to make contact with the lateral outer surface of the plant pot. Also at a higher level and on the other side of the conveyor belt (2), i.e. opposite the strap (4), there is a cleaning roller module (5) positioned horizontally and parallel to the conveyor belt (2) that rotates on its horizontal axis to clean the lateral outer surface of the plant pot (1).

Also in this figure 3, a height regulator (6) can be observed that regulates the tilt of the conveyor belt (2) in accordance with the height of the plant pot to be cleaned, and a traveller (7) connected to the strap (4) that moves transversally in relation to the frame (3), which regulates the distance between the strap (4) and the cleaning roller module (5) to define the pressure on the plant pot (1) due to contact between the strap (4) and the cleaning roller module (5).

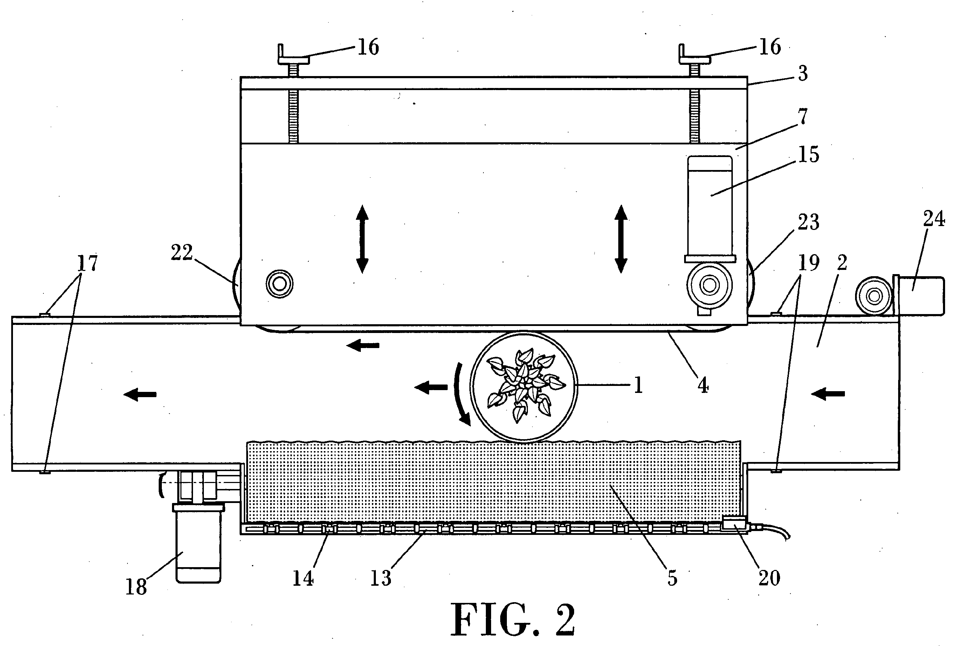

With the plant pot (1) thus situated, as shown in figure 2, the combination of the longitudinal movement of the strap (4) with the rotational movement of the cleaning roller module (5) and with the longitudinal movement of the conveyor belt (2) brings about a longitudinal upward and rotational movement of the plant pot (1) around its vertical axis that facilitates cleaning of the entire lateral outer surface by the cleaning roller module (5).

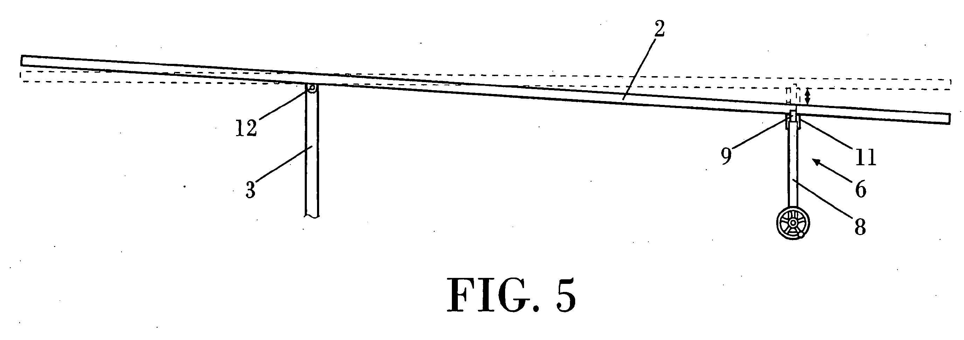

In figures 1 and 5 it is possible to observe the height regulator (6) that regulates the tilt of the conveyor belt (2), which comprises a tube (8) that is fixed to the frame (3), wherein a rod (9) moves due to the actuation of a handle (10), the upper end of the rod (9) being solidly joined to a transversal arm (11) whereon the conveyor belt (2) rests, as can be observed in figure 4. In figure 5 it can be observed that the vertical movement of the rod (9) determines the tilt of the conveyor belt (2) by means of a point of articulation (12) in relation to the frame (3), consequently adjusting the tilt of the conveyor belt (2).

Moreover, in figures 1 and 2 it can be observed that there is a water pipe (13) mounted on the frame (3) and in correspondence with the cleaning roller module (5), which has a number of nozzles (14) wherefrom water is sprayed onto the cleaning brush module (5) to facilitate cleaning of the plant pot (1). It is also anticipated that there is an open-topped tank (21) underneath the conveyor belt (2) and connected to the frame (3), as shown in figures 1 and 3, which collects and stores the dirty water from the cleaning process.

In figures 2 and 3 it can also be observed that the strap (4) is mounted on a pulley (22, 23) system that is actuated by an electric motor (15) with an adjustable speed, and that the traveller (7) that comprises these elements can be moved transversally in relation to the frame (3) by means of handles (16).

As can be observed in figures 1 and 2, the conveyor belt (2) has an electric motor (24) with a variable speed, and it can include an output detector (17) that indicates the presence of a plant pot in the output area, a situation that causes the motor (24) to stop, thereby bringing the conveyor belt (2) to a standstill. Once the plant pot (1) has been removed, the conveyor belt (2) starts to move again.

Furthermore, the cleaning roller module (5) rotates as a consequence of activating an electric motor (18), shown in the same figures 1 and 2, which can also be activated on receiving the signal from an input detector (19) that detects that the plant pot (1) is entering the cleaning area. This input detector (19) is also connected to an electrically-operated valve (20) that causes water to flow towards the water pipe (13) when it detects that the plant pot (1) is passing, thus helping to control the water consumption.

There is a control panel (25) mounted on the frame (3) to control the operation of the machine, as shown in figure 3.

## Claims

1. Machine for cleaning plant pots, applicable for cleaning the lateral outer surface of the plant pot (1), **characterised in that** it comprises:
- a conveyor belt (2) that moves longitudinally with a variable speed that presents an input area whereon the dirty plant pot is placed and an output area wherefrom the clean plant pot is collected,
- a frame (3) that supports the conveyor belt (2),
- a strap (4) situated at a higher level than the conveyor belt (2) and on one side thereof, which moves longitudinally in the direction of the conveyor belt (2) and at a higher speed than this,
- a cleaning roller module (5) opposite the strap (4), disposed horizontally and parallel to the conveyor belt (2) and that rotates on its horizontal axis,
- a height regulator (6) that regulates the tilt of the conveyor belt (2) in accordance with the height of the plant pot to be cleaned, and
- a traveller (7) connected to the strap (4) that moves transversally in relation to the frame (3) and regulates the distance between the strap (4) and the cleaning roller module (5) to define the pressure on the plant pot (1) due to contact between the strap (4) and the cleaning roller module (5),
wherein the combination of the longitudinal movement of the strap (4) with the rotational movement of the cleaning roller module (5) and with the longitudinal movement of the conveyor belt (2) brings about a longitudinal upward and rotational movement of the plant pot (1) around its vertical axis that determines the cleaning of the entire height of the lateral outer surface by means of the cleaning roller module (5).

2. Machine for cleaning plant pots according to claim 1, **characterised in that** the height regulator (6) comprises a tube (8) that is fixed to the frame (3), wherein a rod (9) moves due to an actuation mechanism (10), the upper end of the rod (9) being solidly joined to a transversal arm (11) whereon the conveyor belt (2) rests,

3. Machine for cleaning plant pots according to claim 1 or 2, **characterised in that** an articulation (12) is defined between the conveyor belt (2) and the frame (3) at the opposite end from the height regulator (6) to enable the conveyor belt (2) to tilt in relation to the frame (3) due to the action of the height regulator (6), thus adjusting the tilt of the conveyor belt (2).

4. Machine for cleaning plant pots according to claim 1, **characterised in that** it has a water pipe (13) mounted on the frame (3) and in correspondence with the cleaning roller module (5), which consists of a number of nozzles (14) wherefrom water is sprayed onto the cleaning brush module (5) to facilitate cleaning of the plant pot (1).

5. Machine for cleaning plant pots according to claim 1, **characterised in that** there is an open-topped tank (21) underneath the conveyor belt (2) and connected to the frame (3) that collects and stores the dirty water from the cleaning process.

6. Machine for cleaning plant pots according to claim 1, **characterised in that** the traveller (7) comprises the strap (4) mounted on a pulley (22, 23) system that is actuated by a motor (15) with an adjustable speed and it can be moved by a means of actuation (16) in a transversal direction in relation to the frame (3).

7. Machine for cleaning plant pots according to claim 1, **characterised in that** it includes an output detector (17) that indicates the presence of a plant pot in the output area of the conveyor belt (2), which causes the conveyor belt (2) to stop.

8. Machine for cleaning plant pots according to claim 4, **characterised in that** it has an electrically-operated valve (20) connected to the pipe (13) that controls the flow of water thereto.

9. Machine for cleaning plant pots according to claims 4 and 8, **characterised in that** it includes an input detector (19) that detects the entry of the plant pot (1) towards the area where the cleaning roller module (5) is situated and which is connected to the electrically-operated valve (20) that activates the flow of water to the water pipe (13) in this situation.

## Patentansprüche

1. Vorrichtung zum Säubern von Pflanzentöpfen, geeignet zum Säubern der seitlichen äußeren Oberfläche des Pflanzentopfs (1), **dadurch gekennzeichnet, dass** sie umfasst:
- ein Förderband (2), das sich in Längsrichtung mit einer variablen Geschwindigkeit bewegt, das eine Eingabefläche, auf die der schmutzige Pflanzentopf platziert wird, und eine Ausgabefläche, von welcher der gesäuberte Pflanzentopf aufgenommen wird, bildet,
- einen Rahmen (3), der das Förderband (2) stützt,
- einen Gurt (4), der in einer höheren Höhe als das Förderband (2) und auf einer Seite davon angeordnet ist, der sich in Längsrichtung in der Richtung des Förderbands (2) und mit einer höheren Geschwindigkeit als dieses bewegt,
- ein Säuberungsrollenmodul (5) gegenüber dem Gurt (4), das horizontal und parallel zu dem Förderband (2) angeordnet ist und das auf seiner horizontalen Achse rotiert,
- einen Höhenregulator (6), der die Neigung des Förderbands (2) in Übereinstimmung mit der Höhe des zu reinigenden Pflanzentopfs reguliert, und
- eine Verfahrvorrichtung (7), die mit dem Gurt (4) verbunden ist, die sich in Querrichtung in Bezug auf den Rahmen (3) bewegt und den Abstand zwischen dem Gurt (4) und dem Säuberungsrollenmodul (5) reguliert, um den Druck auf den Pflanzentopf (1) auf Grund des Kontakts zwischen dem Gurt (4) und dem Säuberungsrollenmodul (5) zu definieren,
wobei die Kombination der Bewegung des Gurts (4) in Längsrichtung mit der Drehbewegung des Säuberungsrollenmoduls (5) und mit der Bewegung des Förderbands (2) in Längsrichtung eine längs nach oben gerichtete und drehende Bewegung des Pflanzentopfs (1) um seine vertikale Achse bewirkt, was die Säuberung der gesamten Höhe der seitlichen äußeren Oberfläche durch das Säuberungsrollenmodul (5) bestimmt.

2. Vorrichtung zum Säubern von Pflanzentöpfen nach Anspruch 1, **dadurch gekennzeichnet, dass** der Höhenregulator (6) eine Röhre (8) aufweist, die an dem Rahmen (3) befestigt ist, in der sich eine Stange (9) auf Grund eines Betätigungsmechanismus (10) bewegt, wobei das obere Ende der Stange (9) fest mit einem Querarm (11) verbunden ist, worauf das Förderband (2) ruht.

3. Vorrichtung zum Säubern von Pflanzentöpfen nach Anspruch 1 oder 2, **dadurch gekennzeichnet, dass** ein Gelenk (12) zwischen dem Förderband (2) und dem Rahmen (3) an dem dem Höhenregulator (6) gegenüberliegenden Ende definiert ist, um es dem Förderband (2) zu ermöglichen, sich in Bezug auf den Rahmen (3) auf Grund der Aktion des Höhenregulators (6) zu neigen, wodurch die Neigung des Förderbands (2) eingestellt wird.

4. Vorrichtung zum Säubern von Pflanzentöpfen nach Anspruch 1, **dadurch gekennzeichnet, dass** sie ein Wasserrohr (13) aufweist, das an dem Rahmen (3) und in Übereinstimmung mit dem Säuberungsrollenmodul (5) montiert ist, das aus einer Anzahl von Düsen (14) besteht, aus denen Wasser auf das Säuberungsbürstenmodul (5) gesprüht wird, um eine Säuberung des Pflanzentopfs (1) zu erleichtern.

5. Vorrichtung zum Säubern von Pflanzentöpfen nach Anspruch 1, **dadurch gekennzeichnet, dass** es einen oben geöffneten Tank (21) unterhalb des Förderbands (2) und verbunden mit dem Rahmen (3) gibt, der das schmutzige Wasser von dem Säuberungsprozess sammelt und aufbewahrt.

6. Vorrichtung zum Säubern von Pflanzentöpfen nach Anspruch 1, **dadurch gekennzeichnet, dass** die Verfahrvorrichtung (7) den Gurt (4) an einem Antriebsrad (22, 23) System montiert aufweist, das durch einen Motor (15) mit einer einstellbaren Geschwindigkeit angetrieben wird, und sie durch einen Antrieb (16) in einer Querrichtung in Bezug auf den Rahmen (3) bewegt werden kann.

7. Vorrichtung zum Säubern von Pflanzentöpfen nach Anspruch 1, **dadurch gekennzeichnet, dass** sie einen Ausgabedetektor (17) aufweist, der das Vorhandensein eines Pflanzentopfs in der Ausgabefläche des Förderbands (2) anzeigt, was das Förderband (2) dazu bringt, anzuhalten.

8. Vorrichtung zum Säubern von Pflanzentöpfen nach Anspruch 4, **dadurch gekennzeichnet, dass** sie ein elektrisch betriebenes Ventil (20) aufweist, das mit dem Rohr (13) verbunden ist, das den Fluss von Wasser dahin steuert.

9. Vorrichtung zum Säubern von Pflanzentöpfen nach den Ansprüchen 4 und 8, **dadurch gekennzeichnet, dass** sie einen Eingabedetektor (19) enthält, der das Eingeben des Pflanzentopfs (1) in Richtung der Fläche erkennt, wo das Säuberungsrollenmodul (5) angeordnet ist, und der mit dem elektrisch betriebenen Ventil (20) verbunden ist, das den Fluss von Wasser zu dem Wasserrohr (13) in dieser Situation aktiviert.

## Revendications

1. Appareil destiné au lavage des pots de fleurs, applicable au lavage de la surface latérale externe du pot de fleurs (1), **caractérisé en ce qu'**il comprend :
- une courroie transporteuse (2) qui se déplace longitudinalement à vitesse variable et qui présente une zone d'entrée sur laquelle le pot de fleurs sale est placé et une zone de sortie à partir de laquelle le pot de fleurs propre est collecté,
- un châssis (3) qui supporte la courroie transporteuse (2),
- une sangle (4) située à un niveau plus haut que la courroie transporteuse (2) et sur un côté de celle-ci, qui se déplace longitudinalement dans la direction de la courroie transporteuse (2) et à une vitesse plus rapide que celle-ci,
- un module de rouleau nettoyeur (5) opposé à la sangle (4), et disposé horizontalement et parallèle à la courroie transporteuse (2) et qui tourne sur son axe horizontal,
- un régulateur de hauteur (6) qui régule l'inclinaison de la courroie transporteuse (2) en fonction de la hauteur du pot de fleurs à laver, et
- un coulisseau (7) relié à la sangle (4) qui se déplace transversalement par rapport au châssis (3) et régule la distance entre la sangle (4) et le module de rouleau nettoyeur (5) pour définir la pression sur le pot de fleurs (1) due au contact entre la sangle (4) et le module de rouleau nettoyeur (5),
dans lequel la combinaison du déplacement longitudinal de la sangle (4) et le déplacement rotatif du module de rouleau nettoyeur (5) et le déplacement longitudinal de la courroie transporteuse (2) aboutit à un déplacement longitudinal vers le haut et en rotation du pot de fleurs (1) autour de son axe vertical qui détermine le lavage de toute la hauteur de la surface latérale externe au moyen du module de rouleau nettoyeur (5).

2. Appareil destiné au lavage des pots de fleurs selon la revendication 1, **caractérisé en ce que** le régulateur de hauteur (6) comprend un tube (8) qui est fixé au châssis (3), dans lequel une tige (9) se déplace grâce à un mécanisme d'actionnement (10), l'extrémité supérieure de la tige (9) étant solidement jointe à un bras transversal (11) sur lequel repose la courroie transporteuse (2).

3. Appareil destiné au lavage des pots de fleurs selon la revendication 1 ou 2, **caractérisé en ce qu'**une articulation (12) est définie entre la courroie transporteuse (2) et le châssis (3) au niveau de l'extrémité opposée depuis le régulateur de hauteur (6) pour permettre à la courroie transporteuse (2) de s'incliner par rapport au châssis (3) en raison de l'action du régulateur de hauteur (6), réglant ainsi l'inclinaison de la courroie transporteuse (2).

4. Appareil destiné au lavage des pots de fleurs selon la revendication 1, **caractérisé en ce qu'**il comporte une conduite d'eau (13) montée sur le châssis (3) et en correspondance avec le module de rouleau nettoyeur (5), qui consiste en un certain nombre de buses (14) à partir desquelles de l'eau est pulvérisée sur le module de rouleau nettoyeur (5) afin de faciliter le lavage du pot de fleurs (1).

5. Appareil destiné au lavage des pots de fleurs selon la revendication 1, **caractérisé en ce qu'**un réservoir dont la partie supérieure est ouverte (21) se trouve sous la courroie transporteuse (2) et est relié au châssis (3) qui collecte et stocke l'eau usagée au cours du processus de lavage.

6. Appareil destiné au lavage des pots de fleurs selon la revendication 1, **caractérisé en ce que** le coulisseau (7) comprend la sangle (4) montée sur un système de poulie (22, 23) qui est actionné par un moteur (15) à une vitesse réglable et il peut être déplacé par un moyen d'actionnement (16) dans une direction transversale par rapport au châssis (3).

7. Appareil destiné au lavage des pots de fleurs selon la revendication 1, **caractérisé en ce qu'**il comprend un détecteur de sortie (17) qui indique la présence d'un pot de fleurs dans la zone de sortie de la courroie transporteuse (2), ce qui entraîne l'arrêt de la courroie transporteuse (2).

8. Appareil destiné au lavage des pots de fleurs selon la revendication 4, **caractérisé en ce qu'**il comporte une électrovalve (20) reliée à la conduite (13) qui commande le flux d'eau vers celle-ci.

9. Appareil destiné au lavage des pots de fleurs selon les revendications 4 et 8, **caractérisé en ce qu'**il comprend un détecteur d'entrée (19) qui détecte l'entrée du pot de fleurs (1) vers la zone où se trouve le module de rouleau nettoyeur (5) et qui est relié à l'électrovalve (20) qui active le flux d'eau vers la conduite d'eau (13) dans cette situation.
